# EUROPÄISCHE PATENTANMELDUNG

(11) **EP 1 004 811 A2**
(43) Veröffentlichungstag der Anmeldung: **31.05.2000**
(21) Anmeldenummer: 99120445.4
(22) Anmeldetag: 14.10.1999
(51) Int. Cl.: F16L 55/165, E03F 3/04, E03F 3/06, B29C 63/34, E21D 11/38, F16L 47/06, F16L 21/02, F16L 47/02

(54) **Rohrmodul zur Sanierung von Kanalisationsleitungen**

(30) Priorität: 14.10.1998 DE 29818296 U
(71) Anmelder: SIMONA AG, D-55606 Kirn/Nahe (DE)
(72) Erfinder: Donath, Dieter, 22869 Schenefeld Hamburg (DE)
(74) Vertreter: Forstmeyer, Dietmar, Dr. rer. nat., Dipl.-Chem.

(57) **Zusammenfassung**

Die vorliegende Erfindung betrifft ein Rohrmodul mit tragfähiger Eigenstatik, insbesondere zum Einbau in ein Kanalprofil oder dergleichen, welches Rohrmodul an mindestens einem seiner freien Enden Verbindungsmittel (11, 12) zur längskraftschlüssigen Verbindung mit einem weiteren Rohrmodul aufweist, **wobei** das Rohrmodul von im wesentlichen eiförmigem, elliptischem oder ovalem Querschnitt ist und die Wandung (2) des Rohrmoduls auf ihrer Außenseite (2o, 2s, 2u) mindestens eine als Abstandshalter (31, 32, 33, 34) und/oder als Anker (4) ausgebildete Erhebung aufweist.

## Beschreibung

Die vorliegende Erfindung betrifft ein Rohrmodul mit tragfähiger Eigenstatik, insbesondere zum Einbau in ein Kanalprofil oder dergleichen, welches Rohrmodul an mindestens einem seiner freien Enden Verbindungsmittel zur längskraftschlüssigen Verbindung mit einem weiteren Rohrmodul aufweist.

Derartige Rohrmodule werden häufig bei der Sanierung von schadhaften Kanalisationsleitungen verwendet, wobei die Rohrmodule ohne Freilegen der Kanalisationsleitungen in diese eingepreßt bzw. eingezogen werden (sogenanntes Relining-Verfahren). In diesem Zusammenhang sind insofern besondere Bedingungen zu erfüllen, als beispielsweise im Übergangsbereich zwischen den einzelnen Rohrmodulen eine absolute Dichtigkeit gewährleistet sein muß.

Des weiteren konnten aus der Vergangenheit bekannte Rohrmodule nicht der Notwendigkeit gerecht werden, sich dem Querschnitt der zu sanierenden Kanalisationsleitung in optimaler Weise anzupassen. In diesem Zusammenhang ist zu berücksichtigen, daß die betroffenen Kanalprofile keineswegs stets von kreisförmigem Querschnitt sind; gleichwohl sollte insbesondere der Außenumfang des Übergangsbereichs zwischen den einzelnen Rohrmodulen dem Außenumfang des übrigen Bereichs des Rohrmoduls entsprechen.

Ausgehend hiervon liegt der vorliegenden Erfindung die Aufgabe zugrunde, ein Rohrmodul der eingangs genannten Art bereitzustellen, das sich dem inneren, nicht kreisförmigen Querschnitt eines Kanalprofils formmäßig in überzeugender Weise anpaßt. Hierbei soll der Außenumfang des Übergangsbereichs zwischen den einzelnen Rohrmodulen dem Außenumfang des übrigen Bereichs des Rohrmoduls entsprechen.

Die vorgenannte Aufgabe wird durch ein Rohrmodul gemäß dem Oberbegriff des Hauptanspruchs gelöst, wobei gemäß der Lehre der vorliegenden Erfindung das Rohrmodul von im wesentlichen eiförmigem, elliptischem oder ovalem Querschnitt ist und die Wandung des Rohrmoduls auf ihrer Außenseite mindestens eine als Abstandshalter und/oder als Anker ausgebildete Erhebung aufweist.

Durch das im wesentlichen eiförmige, elliptische oder ovale Profil wird erfindungsgemäß ein Rohrmodul bereitgestellt, das sich dem nicht kreisförmigen Querschnitt der im Wege des Relining-Verfahrens zu sanierenden Kanalisationsleitung in adäquater Weise anpaßt. Hierzu sind Rohrmodule von eiförmigem Querschnitt in besonders vortrefflicher Weise geeignet.

Indem die Wandung des Rohrmoduls auf ihrer Außenseite erfindungsgemäß mindestens eine als Abstandshalter und/oder als Anker ausgebildete Erhebung aufweist, wird auf für den Fachmann nicht vorhersehbare Weise erreicht, daß der Außenumfang des Übergangsbereichs zwischen den einzelnen Rohrmodulen in etwa dem Außenumfang des übrigen Bereichs des Rohrmoduls entspricht.

Wenn das vorliegende Rohrmodul auf besonders erfinderische Weise weitergebildet werden soll, so ist an sich diametral gegenüberliegenden Bereichen der Wandung jeweils mindestens ein Abstandshalter vorzusehen. Die Abstandshalter, die sich vorzugsweise in Längsrichtung des Rohrmoduls erstrecken, können hierbei beispielsweise im Bereich der oberen Außenfläche der Wandung und/oder im Bereich der unteren Außenfläche der Wandung angeordnet sein. Alternativ oder in Ergänzung hierzu können auch die seitlichen Außenflächen der Wandung derartige Abstandshalter aufweisen. Gemäß einer bevorzugten Ausführungsform der vorliegenden Erfindung sind vier Abstandshalter vorgesehen, wobei sich an jeder Außenfläche jeweils ein Abstandshalter befinden kann.

Eine besondere Bedeutung der Abstandshalter, die in bevorzugter Weise auf der Außenseite der Wandung des Rohrmoduls aufgeschweißt, aufgespritzt oder in ähnlicher Form Weise angebracht sind, kann darin zu sehen sein, daß in Abhängigkeit von der Form und/oder von der Größe der Kanalprofile Ringspalte in der Größenordnung von etwa dreißig Millimeter bis etwa fünfzig Millimeter zu berücksichtigen sind. Diese Ringspalte, die zwischen den mit den Abstandshaltern versehenen Außenflächen der Wandung und den Innenflächen der Kanalprofile gebildet sind, werden beispielsweise mit Porenleichtbeton oder dergleichen verdämmt.

Zusätzlich zu den Abstandshaltern oder in Ergänzung zu den Abstandshaltern sind gemäß einer besonders vorteilhaften Weiterbildung der vorliegenden Erfindung die Anker auf den seitlichen Außenflächen der Wandung vorgesehen. Durch diese Anker, von denen auf jeder der beiden seitlichen Außenflächen der Wandung beispielsweise jeweils 2 bis 20, insbesondere 6 bis 15 und vorzugsweise etwa neun Stück vorgesehen sind und die zweckmäßigerweise versetzt zueinander angeordnet sind, wird die Stabilität der Wandung in signifikanter Weise erhöht. Ansonsten erfüllen die Anker, die vorzugsweise von im wesentlichen kreisförmigem Querschnitt sind, die vorstehend bereits für die Abstandshalter erläuterten Funktionen.

Die Querschnittsabmessungen des Rohrmoduls gemäß der vorliegenden Erfindung richten sich naturgemäß nach verschiedenen äußeren Gegebenheiten, wie etwa nach der Form und/oder nach der Größe des Kanalprofils, nach dem zur Verfügung stehenden Schachtdurchmesser (in der Regel 2000 Millimeter auf 2000 Millimeter) sowie nach weiteren Faktoren:

In bevorzugter Weise beträgt die Querschnittsabmessung des Rohrmoduls in der Richtung maximaler Ausdehnung etwa 500 Millimeter bis etwa 1200 Millimeter und in der zur Richtung maximaler Ausdehnung senkrechten Richtung etwa 300 Millimeter bis etwa 800 Millimeter. Beispielhaft seien hierbei die entsprechenden Querschnittsabmessungen 600/400, 700/500, 750/500, 750/600, 860/570, 900/600, 1050/600, 1050/700, 1200/800 und 1350/900 (jeweils in der Richtung maximaler Ausdehnung/in der zur Richtung maximaler Ausdehnung senkrechten Richtung, gemessen in Millimeter) genannt.

Ebenso wie die Querschnittsabmessungen sind auch die Längsdimensionen des Rohrmoduls von verschiedenen Umständen abhängig, so unter anderem vom beabsichtigten Einsatzort und -zweck des Rohrmoduls, von der Zugänglichkeit des Kanalprofils und wiederum vom zur Verfügung stehenden Schachtdurchmesser (in der Regel 2000 Millimeter auf 2000 Millimeter). Vorteilhafterweise beträgt die Gesamtlänge des Rohrmoduls etwa 500 Millimeter bis etwa 1500 Millimeter, insbesondere etwa 700 Millimeter oder etwa 1000 Millimeter. In Entsprechung hierzu kann die Baulänge des Rohrmoduls etwa 630 Millimeter oder etwa 900 Millimeter betragen.

Nicht unwesentlich für die tragfähige Eigenstatik des Rohrmoduls gemäß der vorliegenden Erfindung ist die Wandungsstärke desselben, wobei gegebenenfalls die Abstandshalter und/oder die Anker statisch entsprechend zu berücksichtigen sind, das heißt bei Anordnen von Abstandshaltern und/oder von Ankern kann die Wandungsstärke des Rohrmoduls, die sich in bevorzugter Weise in der Größenordnung von etwa fünf Millimetern bis etwa 50 Millimetern, hierbei insbesondere in der Größenordnung von etwa 10 Millimetern bis etwa 25 Millimetern bewegt, entsprechend verringert werden.

Die Herstellung des Rohrmoduls gemäß der vorliegenden Erfindung kann auf verschiedene Weisen erfolgen: So kann das Rohrmodul extrudiert oder gespritzt sein; es ist jedoch auch eine Variante denkbar, bei der das Rohrmodul gegossen, vorzugsweise rotationsgegossen ist.

Gemäß einer vorteilhaften Ausgestaltung des Rohrmoduls gemäß der vorliegenden Erfindung ist dessen Material abriebfest, beständig oder resistent gegenüber Abwasser und/oder gegenüber Grundwasser, hierbei insbesondere korrosionsfest gegenüber Abwasser und/oder gegenüber Grundwasser, hydraulisch glatt und/oder UV-beständig, wobei die vorgenannten Eigenschaften naturgemäß auch für die Materialerhaltung und demzufolge für die Lebensdauer des Rohrmoduls förderlich sind. Hierzu eignet sich Kunststoff, insbesondere Polyethylen in natürlichem Zustand oder eingefärbtes Polyethylen oder eine zweischichtige Kombination derselben, da Polyethylen von geringer Masse, beständig und gut verarbeitbar ist.

Wie vorstehend bereits dargelegt, muß im Übergangsbereich zwischen den einzelnen Rohrmodulen eine absolute Dichtigkeit gewährleistet sein, so daß der längskraftschlüssigen Verbindung der Rohrmodule eine besondere Bedeutung zukommt:

Hierbei handelt es sich bei der längskraftschlüssigen Verbindung in bevorzugter Weise um eine Steckverbindung, insbesondere um eine im wesentlichen bündig ausgebildete Muffenverbindung. Die Wandungsstärke des Rohrmoduls im Bereich der Muffenverbindung beträgt aus Stabilitätsgründen zweckmäßigerweise mindestens etwa vierzehn Millimeter, jedenfalls kann die Wandung im Bereich der Muffenverbindung im Vergleich zur Wandung des übrigen Rohrmoduls verstärkt sein, um eine absolut dichte, robuste und wurzelfeste Verbindung der einzelnen Rohrmodule miteinander zu erzielen.

Wenn unabhängig hiervon oder in Ergänzung hierzu die Höhe des Abstandshalters in etwa der Höhe der Muffenverbindung entspricht, so ist eine einwandfreie Verdämmung, vorzugsweise mit Porenleichtbeton, am gesamten Umfang gewährleistet. Die Muffenverbindung eignet sich dann in vorzüglicher Weise für einen Einsatz beim Relining-Verfahren.

In Entsprechung hierzu handelt es sich bei dem Verbindungsmittel an einem freien Ende des Rohrmoduls in vorteilhafter Weise um eine Muffe, deren Länge vorzugsweise etwa siebzig Millimeter bis etwa 100 Millimeter beträgt.

Um das Rohrmodul zügig im Schachtbauwerk montieren und fixieren zu können, ist die Muffe in ihrem Endbereich zweckmäßigerweise mit einer Außennut versehen, die eine Breite von etwa fünf Millimetern bis etwa zehn Millimetern, vorzugsweise von etwa sieben Millimetern, und eine Tiefe von etwa fünf Millimetern bis etwa zehn Millimetern, vorzugsweise von etwa sechs Millimetern aufweisen kann. Hierdurch kann das Rohrmodul, vorzugsweise mit Hilfe einer Stopperplatte, in Position gehalten werden, um das folgende Rohrmodul in die Steckverbindung einrasten zu lassen.

Der Einrastvorgang wird hierbei entweder mit einer hydraulischen Schubverbindung von besonders kompakter Bauart oder mit einer Kanalwinde mittels Zugseil und Ziehstern durchgeführt. Die Außennut sollte im übrigen zumindest im oberen Bereich von etwa 180° vorgesehen sein.

Gemäß einer bevorzugten Ausgestaltungsform der vorliegenden Erfindung handelt es sich bei dem Verbindungsmittel am anderen freien Ende des Rohrmoduls um ein Spitzende, das zweckmäßigerweise im wesentlichen formschlüssig in der Muffe eines weiteren Rohrmoduls einrastbar ist. Das Spitzende ist gemäß einer vorteilhaften Ausführungsform in seinem Endbereich mit einer Nut versehen, die eine Breite von etwa zwanzig Millimetern und eine Tiefe von etwa vier Millimetern aufweisen kann.

Da im Übergangsbereich zwischen den einzelnen Rohrmodulen eine absolute Dichtigkeit gewährleistet sein muß, weist die Muffenverbindung gemäß einer besonders erfinderischen Weiterbildung des Rohrmoduls ein Dichtungssystem auf, bei dem es sich um eine Mehrfach-Lippendichtung, vorzugsweise aus elastomerem Material, handelt, die geeigneterweise mit zwei Dichtlippen versehen ist.

Alternativ hierzu kann es sich bei dem Dichtungssystem um ein Heizwendelschweißsystem handeln, das in bevorzugter Weise in die Wandung integriert ist.

Weitere Ausgestaltungen, Merkmale und Vorteile der vorliegenden Erfindung werden nachfolgend anhand der Zeichnung in den Figuren 1 bis 4 erläutert, die ein Ausführungsbeispiel eines Rohrmoduls in exemplarischer Form veranschaulichen.

Es zeigt:
- Figur 1: ein Ausführungsbeispiel eines Rohrmoduls gemäß der vorliegenden Erfindung im Längsschnitt (partielle Aufrißdarstellung);
- Figur 2: das Rohrmodul aus Figur 1 im Querschnitt;
- Figur 3: ein Muffenende des Rohrmoduls aus Figur 1 im Längsschnitt (stark vergrößerte Darstellung); und
- Figur 4: ein Spitzende des Rohrmoduls aus Figur 1 im Längsschnitt (stark vergrößerte Darstellung).

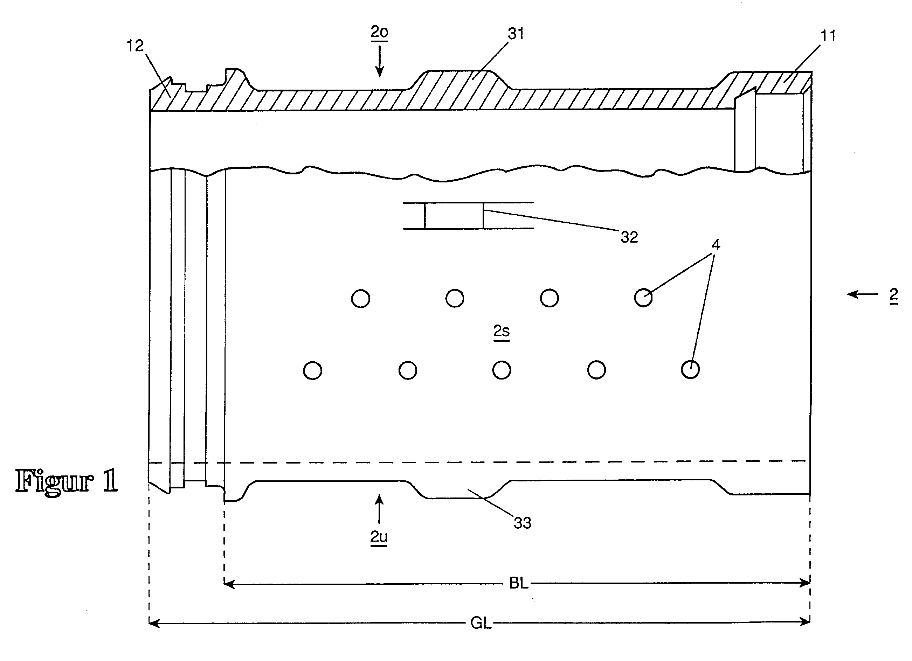

Identische bzw. ähnliche Komponenten oder Merkmale sind in den Figuren 1 bis 4 mit den gleichen Bezugszeichen versehen.

Figur 1 zeigt ein Ausführungsbeispiel eines Rohrmoduls gemäß der vorliegenden Erfindung im Längsschnitt (partielle Aufrißdarstellung). Das Material (Polyethylen = PE) des Rohrmoduls ist abriebfest, beständig und resistent gegenüber Abwasser und/oder gegenüber Grundwasser, hierbei insbesondere korrosionsfest gegenüber Abwasser und/oder gegenüber Grundwasser, hydraulisch glatt und UV-beständig. Das Rohrmodul selbst weist eine tragfähige Eigenstatik auf und ist zum Einbau in ein schadhaftes und mithin sanierungsbedürftiges Kanalprofil vorgesehen. Hierbei wird das Rohrmodul ohne Freilegen der Kanalisationsleitung in diese eingepreßt bzw. eingezogen, was in der Praxis als sogenanntes Relining bezeichnet wird.

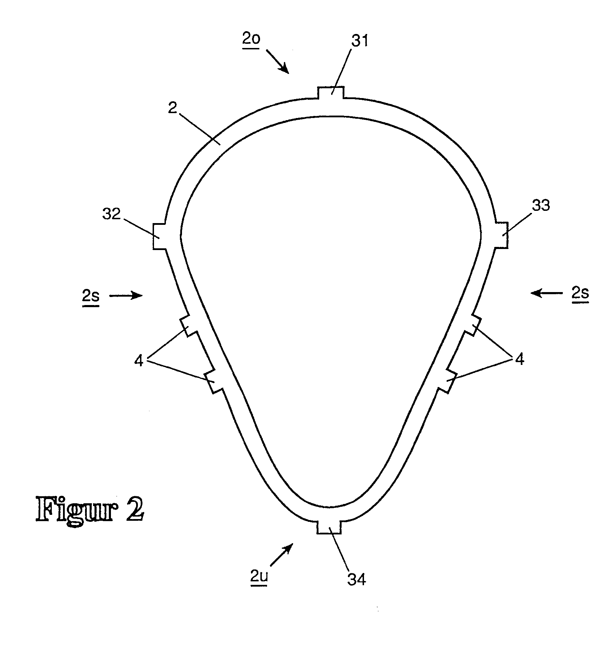

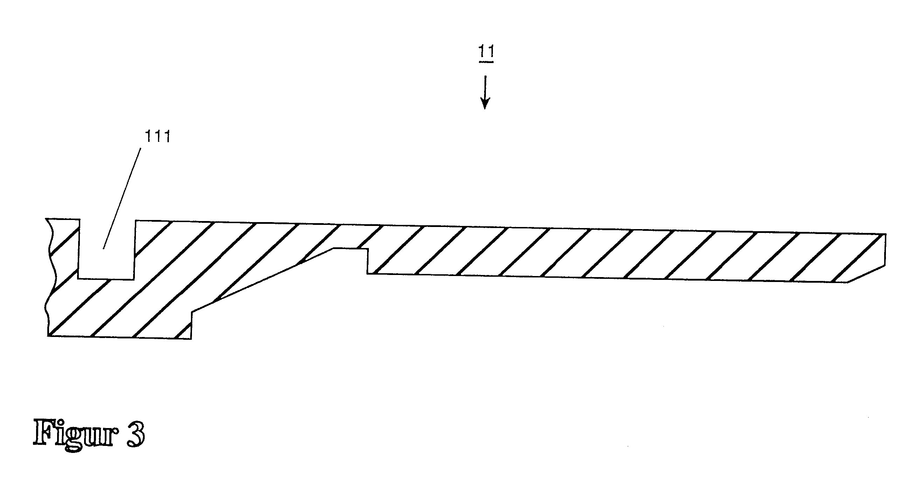

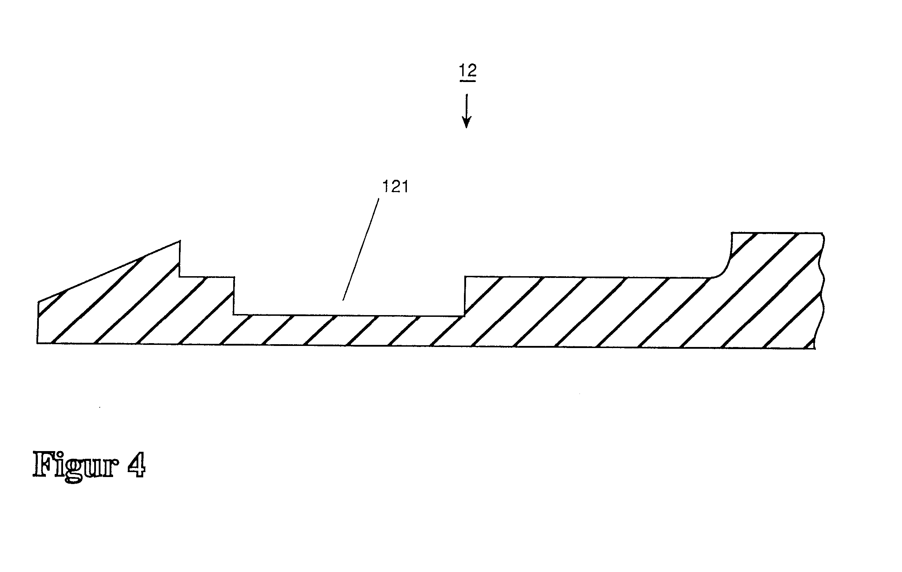

Das in Figur 1 dargestellte Rohrmodul weist an seinen freien Enden Verbindungsmittel 11, 12 zur längskraftschlüssigen Verbindung mit einem weiteren Rohrmodul auf (vgl. hierzu die nachstehenden Erläuterungen zu den Figuren 3 und 4). Wie aus der Querschnittdarstellung der Figur 2 hervorgeht, ist das Rohrmodul von im wesentlichen eiförmigem Querschnitt, so daß sich das Rohrmodul einem nicht kreisförmigen Querschnitt einer im Wege des Relining-Verfahrens zu sanierenden Kanalisationsleitung in adäquater Weise anpaßt.

Die Wandung 2 des Rohrmoduls weist auf ihrer Außenseite 2o, 2s, 2u Abstandshalter 31, 32, 33, 34 und Anker 4 auf, so daß der Außenumfang des Übergangsbereichs zwischen den einzelnen Rohrmodulen in etwa dem Außenumfang des übrigen Bereichs des Rohrmoduls entspricht. Wie aus der Längsschnittdarstellung der Figur 1, besser jedoch noch aus der Querschnittdarstellung der Figur 2 hervorgeht, ist an den sich diametral gegenüberliegenden Bereichen der Wandung 2 jeweils ein Abstandshalter 31, 32, 33, 34 vorgesehen. Diese insgesamt vier Abstandshalter 31, 32, 33, 34, die sich in Längsrichtung des Rohrmoduls erstrecken (vgl. Figur 1)und auf der Außenfläche 2o, 2s, 2u der Wandung 2 des Rohrmoduls aufgespritzt sind, sind im Bereich der oberen Außenfläche 2o der Wandung 2, im Bereich der unteren Außenfläche 2u der Wandung 2 sowie im Bereich der seitlichen Außenflächen 2s der Wandung 2 vorgesehen (vgl. Figur 2).

Zusätzlich zu den Abstandshaltern 31, 32, 33, 34 sind die Anker 4 auf den seitlichen Außenflächen 2s der Wandung 2 vorgesehen. Durch diese Anker 4 von im wesentlichen kreisförmigem Querschnitt, von denen auf jeder der beiden seitlichen Außenflächen 2s der Wandung 2 jeweils neun Stück vorgesehen sind und die in zwei Reihen versetzt zueinander angeordnet sind (vgl. Figur 1), wird die Stabilität der Wandung 2 in signifikanter Weise erhöht.

Im Übergangsbereich zwischen den einzelnen Rohrmodulen muß eine absolute Dichtigkeit gewährleistet sein, so daß der längskraftschlüssigen Verbindung der Rohrmodule eine besondere Bedeutung zukommt. Hierbei handelt es sich bei der in Figur 1 rechter Hand dargestellten längskraftschlüssigen Verbindung um eine Steckverbindung, nämlich um eine im wesentlichen bündig ausgebildete Muffenverbindung, deren Wandungsstärke aus Stabilitätsgründen etwa fünfzehn Millimeter bis etwa zwanzig Millimeter beträgt und jedenfalls im Vergleich zur Wandung 2 des übrigen Rohrmoduls verstärkt ist, um eine absolut dichte, robuste und wurzelfeste Verbindung der einzelnen Rohrmodule miteinander zu erzielen.

Hierbei ist der Längsschnittdarstellung der Figur 1 entnehmbar, daß die Höhe des Abstandshalters 31, 32, 33, 34 in etwa der Höhe der Muffenverbindung entspricht, so daß eine einwandfreie Verdämmung mit Porenleichtbeton am gesamten Umfang gewährleistet ist. Die Muffenverbindung eignet sich demzufolge in vorzüglicher Weise für das Relining-Verfahren.

In Entsprechung hierzu handelt es sich bei dem in Figur 3 veranschaulichten Verbindungsmittel am in Figur 1 rechten freien Ende des Rohrmoduls um eine Muffe 11. Um das Rohrmodul zügig im Schachtbauwerk montieren und fixieren zu können, ist die Muffe 11 in ihrem Endbereich mit einer Außennut 11 versehen. Hierdurch kann das Rohrmodul mithilfe einer Stopperplatte in Position gehalten werden, um das folgende Rohrmodul in die Steckverbindung einrasten lassen zu können.

Bei dem in Figur 4 verdeutlichten Verbindungsmittel am in Figur 1 linken freien Ende des Rohrmoduls handelt es sich um ein Spitzende 12, das im wesentlichen formschlüssig in der Muffe 11 eines weiteren Rohrmoduls einrastbar ist und in seinem Endbereich mit einer Nut 121 versehen ist.

## Patentansprüche

1. Rohrmodul mit tragfähiger Eigenstatik, insbesondere zum Einbau in ein Kanalprofil oder dergleichen, welches Rohrmodul an mindestens einem seiner freien Enden Verbindungsmittel (11, 12) zur längskraftschlüssigen Verbindung mit einem weiteren Rohrmodul aufweist,
**dadurch gekennzeichnet**, daß das Rohrmodul von im wesentlichen eiförmigem, elliptischem oder ovalem Querschnitt ist und daß die Wandung (2) des Rohrmoduls auf ihrer Außenseite (2o, 2s, 2u) mindestens eine als Abstandshalter (31, 32, 33, 34) und/oder als Anker (4) ausgebildete Erhebung aufweist.

2. Rohrmodul gemäß Anspruch 1, dadurch gekennzeichnet, daß an sich diametral gegenüberliegenden Bereichen der Wandung (2) jeweils mindestens ein Abstandshalter (31, 32, 33, 34) vorgesehen ist.

3. Rohrmodul gemäß Anspruch 1 oder 2, dadurch gekennzeichnet, daß sich die Abstandshalter (31, 32, 33, 34) in Längsrichtung des Rohrmoduls erstrecken.

4. Rohrmodul gemäß mindestens einem der Ansprüche 1 bis 3, dadurch gekennzeichnet, daß vier Abstandshalter (31, 32, 33, 34) vorgesehen sind.

5. Rohrmodul gemäß mindestens einem der Ansprüche 1 bis 4, dadurch gekennzeichnet, daß die Anker (4) auf den seitlichen Außenflächen (2s) der Wandung (2) vorgesehen sind.

6. Rohrmodul gemäß Anspruch 5, dadurch gekennzeichnet, daß auf jeder der beiden seitlichen Außenflächen (2s) der Wandung (2) jeweils 2 bis 20, insbesondere 6 bis 15 und vorzugsweise etwa neun Anker (4) vorgesehen sind.

7. Rohrmodul gemäß mindestens einem der Ansprüche 1 bis 6, dadurch gekennzeichnet, daß die Anker (4) versetzt zueinander angeordnet sind.

8. Rohrmodul gemäß mindestens einem der Ansprüche 1 bis 7, dadurch gekennzeichnet, daß die Anker (4) von im wesentlichen kreisförmigem Querschnitt sind.

9. Rohrmodul gemäß mindestens einem der Ansprüche 1 bis 8, dadurch gekennzeichnet, daß die Querschnittsabmessung des Rohrmoduls in der Richtung maximaler Ausdehnung etwa 500 Millimeter bis etwa 1200 Millimeter und in der zur Richtung maximaler Ausdehnung senkrechten Richtung etwa 300 Millimeter bis etwa 800 Millimeter beträgt.

10. Rohrmodul gemäß mindestens einem der Ansprüche 1 bis 9, dadurch gekennzeichnet, daß die Gesamtlänge (GL) des Rohrmoduls etwa 500 Millimeter bis etwa 1500 Millimeter beträgt.

11. Rohrmodul gemäß Anspruch 10, dadurch gekennzeichnet, daß die Gesamtlänge (GL) des Rohrmoduls etwa 700 Millimeter oder etwa 1000 Millimeter beträgt.

12. Rohrmodul gemäß Anspruch 11, dadurch gekennzeichnet, daß die Baulänge (BL) des Rohrmoduls etwa 630 Millimeter oder etwa 900 Millimeter beträgt.

13. Rohrmodul gemäß mindestens einem der Ansprüche 1 bis 12, dadurch gekennzeichnet, daß die Wandungsstärke des Rohrmoduls etwa fünf Millimeter bis etwa fünfzig Millimeter beträgt.

14. Rohrmodul gemäß Anspruch 13, dadurch gekennzeichnet, daß die Wandungsstärke des Rohrmoduls etwa zehn Millimeter bis etwa 25 Millimeter beträgt.

15. Rohrmodul gemäß mindestens einem der Ansprüche 1 bis 14, dadurch gekennzeichnet, daß das Rohrmodul extrudiert oder gespritzt ist.

16. Rohrmodul gemäß mindestens einem der Ansprüche 1 bis 14, dadurch gekennzeichnet, daß das Rohrmodul gegossen ist.

17. Rohrmodul gemäß Anspruch 16, dadurch gekennzeichnet, daß das Rohrmodul rotationsgegossen ist.

18. Rohrmodul gemäß mindestens einem der Ansprüche 1 bis 17, dadurch gekennzeichnet, daß das Material des Rohrmoduls abriebfest ist.

19. Rohrmodul gemäß mindestens einem der Ansprüche 1 bis 18, dadurch gekennzeichnet, daß das Material des Rohrmoduls beständig und resistent gegenüber Abwasser und/oder gegenüber Grundwasser ist.

20. Rohrmodul gemäß Anspruch 19, dadurch gekennzeichnet, daß das Material des Rohrmoduls korrosionsfest gegenüber Abwasser und/oder gegenüber Grundwasser ist.

21. Rohrmodul gemäß mindestens einem der Ansprüche 1 bis 20, dadurch gekennzeichnet, daß das Material des Rohrmoduls hydraulisch glatt ist.

22. Rohrmodul gemäß mindestens einem der Ansprüche 1 bis 21, dadurch gekennzeichnet, daß das Material des Rohrmoduls UV-beständig ist.

23. Rohrmodul gemäß mindestens einem der Ansprüche 1 bis 22, dadurch gekennzeichnet, daß das Rohrmodul aus Kunststoff ist.

24. Rohrmodul gemäß Anspruch 23, dadurch gekennzeichnet, daß es sich bei dem Kunststoff um Polyethylen (PE) handelt.

25. Rohrmodul gemäß Anspruch 24, dadurch gekennzeichnet, daß das Polyethylen (PE) in natürlichem Zustand oder eingefärbt ist.

26. Rohrmodul gemäß Anspruch 25, dadurch gekennzeichnet, daß eine zweischichtige Kombination aus Polyethylen (PE) in natürlichem Zustand und eingefärbtem Polyethylen (PE) vorgesehen ist.

27. Rohrmodul gemäß mindestens einem der Ansprüche 1 bis 26, dadurch gekennzeichnet, daß der Abstandshalter (31, 32, 33, 34) auf der Außenseite (2o, 2s, 2u) der Wandung (2) des Rohrmoduls aufgeschweißt oder aufgespritzt ist.

28. Rohrmodul gemäß mindestens einem der Ansprüche 1 bis 27, dadurch gekennzeichnet, daß es sich bei der längskraftschlüssigen Verbindung um eine Steckverbindung handelt.

29. Rohrmodul gemäß mindestens einem der Ansprüche 1 bis 28, dadurch gekennzeichnet, daß es sich bei der längskraftschlüssigen Verbindung um eine im wesentlichen bündig ausgebildete Muffenverbindung handelt.

30. Rohrmodul gemäß Anspruch 29, dadurch gekennzeichnet, daß die Wandungsstärke des Rohrmoduls im Bereich der Muffenverbindung mindestens etwa vierzehn Millimeter beträgt.

31. Rohrmodul gemäß Anspruch 29 oder 30, dadurch gekennzeichnet, daß die Wandung im Bereich der Muffenverbindung im Vergleich zur Wandung (2) des übrigen Rohrmoduls verstärkt ist.

32. Rohrmodul gemäß mindestens einem der Ansprüche 29 bis 31, dadurch gekennzeichnet, daß die Höhe des Abstandshalters (31, 32, 33, 34) in etwa der Höhe der Muffenverbindung entspricht.

33. Rohrmodul gemäß mindestens einem der Ansprüche 29 bis 32, dadurch gekennzeichnet, daß es sich bei dem Verbindungsmittel an einem freien Ende des Rohrmoduls um eine Muffe (11) handelt.

34. Rohrmodul gemäß Anspruch 33, dadurch gekennzeichnet, daß die Länge der Muffe (11) etwa siebzig Millimeter bis etwa 100 Millimeter beträgt.

35. Rohrmodul gemäß Anspruch 33 oder 34, dadurch gekennzeichnet, daß die Muffe (11) in ihrem Endbereich mit einer Außennut (111) versehen ist.

36. Rohrmodul gemäß Anspruch 35, dadurch gekennzeichnet, daß die Außennut (111) eine Breite von etwa fünf Millimetern bis etwa zehn Millimetern aufweist.

37. Rohrmodul gemäß Anspruch 36, dadurch gekennzeichnet, daß die Außennut (111) eine Breite von etwa sieben Millimetern aufweist.

38. Rohrmodul gemäß mindestens einem der Ansprüche 35 bis 37, dadurch gekennzeichnet, daß die Außennut (111) eine Tiefe von etwa fünf Millimetern bis etwa zehn Millimetern aufweist.

39. Rohrmodul gemäß Anspruch 38, dadurch gekennzeichnet, daß die Außennut (111) eine Tiefe von etwa sechs Millimetern aufweist.

40. Rohrmodul gemäß mindestens einem der Ansprüche 33 bis 39, dadurch gekennzeichnet, daß es sich bei dem Verbindungsmittel am anderen freien Ende des Rohrmoduls um ein Spitzende (12) handelt.

41. Rohrmodul gemäß Anspruch 40, dadurch gekennzeichnet, daß das Spitzende (12) im wesentlichen formschlüssig in der Muffe (11) eines weiteren Rohrmoduls einrastbar ist.

42. Rohrmodul gemäß Anspruch 40 oder 41, dadurch gekennzeichnet, daß das Spitzende (12) in seinem Endbereich mit einer Nut (121) versehen ist.

43. Rohrmodul gemäß Anspruch 42, dadurch gekennzeichnet, daß die Nut (121) eine Breite von etwa zehn Millimetern bis etwa dreißig Millimetern aufweist.

44. Rohrmodul gemäß Anspruch 43, dadurch gekennzeichnet, daß die Nut (121) eine Breite von etwa zwanzig Millimetern aufweist.

45. Rohrmodul gemäß mindestens einem der Ansprüche 42 bis 44, dadurch gekennzeichnet, daß die Nut (121) eine Tiefe von etwa zwei Millimetern bis etwa sieben Millimetern aufweist.

46. Rohrmodul gemäß Anspruch 45, dadurch gekennzeichnet, daß die Nut (121) eine Tiefe von etwa vier Millimetern aufweist.

47. Rohrmodul gemäß mindestens einem der Ansprüche 29 bis 46, dadurch gekennzeichnet, daß die Muffenverbindung ein Dichtungssystem aufweist.

48. Rohrmodul gemäß Anspruch 47, dadurch gekennzeichnet, daß es sich bei dem Dichtungssystem um eine Mehrfach-Lippendichtung handelt.

49. Rohrmodul gemäß Anspruch 48, dadurch gekennzeichnet, daß die Mehrfach-Lippendichtung aus elastomerem Material ist.

50. Rohrmodul gemäß Anspruch 48 oder 49, dadurch gekennzeichnet, daß die Mehrfach-Lippendichtung mit zwei Dichtlippen versehen ist.

51. Rohrmodul gemäß Anspruch 47, dadurch gekennzeichnet, daß es sich bei dem Dichtungssystem um ein Heizwendelschweißsystem handelt.

52. Rohrmodul gemäß Anspruch 51, dadurch gekennzeichnet, daß das Heizwendelschweißsystem in die Wandung (2) integriert ist.
